**Europäisches Patentamt**

**European Patent Office**

**Office européen des brevets**

(19)

(11) Veröffentlichungsnummer : **0 303 755 B1**

(12) ## EUROPÄISCHE PATENTSCHRIFT

(45) Veröffentlichungstag der Patentschrift :
**06.03.91 Patentblatt 91/10**

(51) Int. Cl.$^5$ : **B01J 2/20, C05F 3/00,
B30B 11/00**

(21) Anmeldenummer : **87890190.9**

(22) Anmeldetag : **13.08.87**

(54) **Vorrichtung zum Granulieren von Hühnerexkrementen od. dgl. Stoffen.**

(43) Veröffentlichungstag der Anmeldung :
**22.02.89 Patentblatt 89/08**

(45) Bekanntmachung des Hinweises auf die
Patenterteilung :
**06.03.91 Patentblatt 91/10**

(84) Benannte Vertragsstaaten :
**BE CH DE FR IT LI NL**

(56) Entgegenhaltungen :
**CH-C- 105 767
DE-A- 3 208 357
DE-C- 381 710
DE-C- 532 108**

(56) Entgegenhaltungen :
**FR-A- 558 529
FR-A- 682 279
FR-A- 2 564 704
US-A- 3 168 057**

(73) Patentinhaber : **Meier, Johann
Mühldorf 322
A-8330 Feldbach (AT)**

(72) Erfinder : **Meier, Johann
Mühldorf 322
A-8330 Feldbach (AT)**

(74) Vertreter : **Hamburger, Walter A., Dipl.-Ing.
Patentanwaltskanzlei HAMBURGER Postfach
96 Mahlerstrasse 9
A-1015 Wien (AT)**

EP 0 303 755 B1

## Beschreibung

Die Erfindung betrifft eine Vorrichtung zum Granulieren von Hühnerexkrementen od. dgl. Stoffen, mit einem zylindrischen Gehäuse, das einen Einlaß und einen Auslaß aufweist und in dem ein Rotor exzentrisch gelagert ist, in dem wenigstens zwei radial angeordnete Flügel verschiebbar gelagert sind.

Hühnerexkremente eignen sich gut zur Herstellung von Düngemitteln. Insbesondere in Hühnerzuchtanstalten fällt eine große Menge Hühnerexkremente an. Es besteht daher das Bedürfnis nach einer Vorrichtung zur Verarbeitung von Hühnerexkrementen, um diese vor Herstellung der Düngemittel zu granulieren. Zu diesem Zweck sind bisher Kolbenpressen versucht worden, doch haben sich diese als unbefriedigend erwiesen, weil einerseits der Leerhub des Kolbens zur Arbeit nichts beiträgt und anderseits das Granuliersieb oder -gitter in verhältnismäßig kurzer Zeit durch Hühnerfedern, Steinchen od. dgl. verstopft wird und sodann gereinigt werden muß, was einen Stillstand der Presse bedeutet.

Aus der FR-A- 2 444 495 ist eine Granuliervorrichtung in Form einer Drehkolbenmaschine bekannt, in deren Einlaßschacht eine hin- und hergehend angetriebene Platte vorgesehen und an deren unterer Gehäuseseite mehrere Löcher ausgebildet sind.

Dem SU-Erfinderschein 625 762 ist eine Granuliervorrichtung mit einem zylindrischen Gehäuse und einer darin zentral gelagerten Welle entnehmbar, die mit zwei Quetschklingen versehen ist. Diese Klingen sind über je zwei teleskopartige Stäbe mit der Welle verbunden. Bei einem Verstopfen der an der Unterseite des Gehäuses vorgesehenen Öffnungen werden die Quetschklingen vom angesammelten Material radial nach innen gedrückt und verlieren ihre Wirksamkeit.

Ziel der Erfindung ist die Beseitigung dieser Mängel und die Schaffung einer Granuliervorrichtung, die wirksam und kontinuierlich betrieben werden kann und bei der die Gefahr des Verstopfen durch unvermeidliche Fremdkörper vermieden ist.

Dieses Ziel wird mit einer Vorrichtung der eingangs genannten Art dadurch erreicht, daß erfindungsgemäß der Auslaß in an sich bekannter Weise in Form eines Siebes, Gitters od. dgl. ausgebildet ist und daß eine gerade Anzahl Flügel vorgesehen ist, von denen in an sich bekannter Weise je zwei einander diametral gegenüberliegen und ein Paar bilden, und daß die Flügel jedes Paares im Rotor sowohl gemeinsam als auch gegenseitig verschiebbar gelagert sowie mittels wenigstens einer Feder auseinandergespannt sind.

Der Erfindung liegt die Idee zugrunde, das Prinzip der Flügelzellenpumpe auf eine Granulierpresse anzuwenden. Eine Flügelzellenpumpe bekannter Bauart würde sich allerdings für den beabsichtigten Zweck überhaupt nicht eignen, weil für diesen erheblich geringere Drehzahlen notwendig sind, wodurch die Flügel nicht mit der nötigen Kraft an das Gehäuse angepreßt bzw. von diesem abgehoben würden und ein auslaßseitig vorgesehenes Granuliersieb oder -gitter sofort verstopfte.

Im Gegensatz zu bekannten Flügelzellenpumpen mit einer ungeraden Anzahl Flügel besitzt die erfindungsgemäße Vorrichtung paarweise angeordnete Flügel, die einander radial gegenüberliegen und insofern zusammenwirken, als sie gemeinsam im Rotor verschiebbar und von einer Feder auseinandergespannt sind, wodurch im Betrieb der Vorrichtung nur ein kurzer Federweg erforderlich ist. Obwohl der größte Hub eines Flügels im Rotor der doppelten Exzentrizität der Rotorachse bezüglich der Gehäuseachse entspricht, ist die Relativbewegung zweier diametral gegenüberliegender Flügel weitaus geringer.

Daher kann nach einem weiteren Merkmal der Erfindung die Feder als Schraubendruckfeder, aber auch als Tellerfederpaket ausgebildet sein. Günstig ist, wenn wenigstens ein verstellbarer Federanschlag vorgesehen ist. Vorteilhafterweise weist die Feder eine progressive Kennlinie auf.

Bei einem bevorzugten Ausführungsbeispiel sind die Flügel jedes Paares auf zwei im Rotor gleitenden radialen teleskopartigen Stäben angebracht. Alternativ können die Flügel jedes Paares auf zwei im Rotor gleitenden radialen Stäben gelagert sein, die mit am Rotor anschlagenden Anschlägen versehen sind. Auf diese Weise kann die Wirksamkeit der Feder auf einen vorbestimmten Winkelbereich des Flügels im Gehäuse eingestellt werden.

Um das Verstopfen des auslaßseitigen Siebes oder Gitters noch besser zu verhindern, kann das äußere Flügelende eine Schneidkante aufweisen. Somit können allenfalls im Sieb bzw. Gitter steckende Hühnerfedern, Stroh od. dgl. abgeschnitten und vom nachkommenden Material leichter hindurchgedrückt werden. Alternativ oder zusätzlich kann das äußere Flügelende aus einer um eine zur Rotorachse parallelen Achse schwenkbaren Leiste bestehen. Dabei ist vorzuziehen, daß die innere Mantelwand des Gehäuses und gegebenenfalls die äußeren Flügelenden gehärtet sind.

Zur Vereinfachung der Konstruktion, der Wartung und Reinigung kann der Rotor aus einer Welle, zwei auf dieser in axialem Abstand angeordneten Scheiben und mit diesen verbundenen Zylindersegmenten bestehen. Günstig ist weiters, wenn der Rotor mit einem an der Gehäuseaußenseite vorgesehenen Schwungrad gekuppelt ist. Um das Betriebsgeräusch der Vorrichtung zu vermindern, kann die Welle des Rotors elastisch gelagert sein.

Da das Granulat bei einfach aufgebauter Vorrichtung und im Landmaschinenbau üblichen großen Toleranzen seitlich am Gehäuse austreten kann, kann schließlich der Auslaß mit über die Rotorachse reichenden seitlichen Abdeckungen abgedeckt sein.

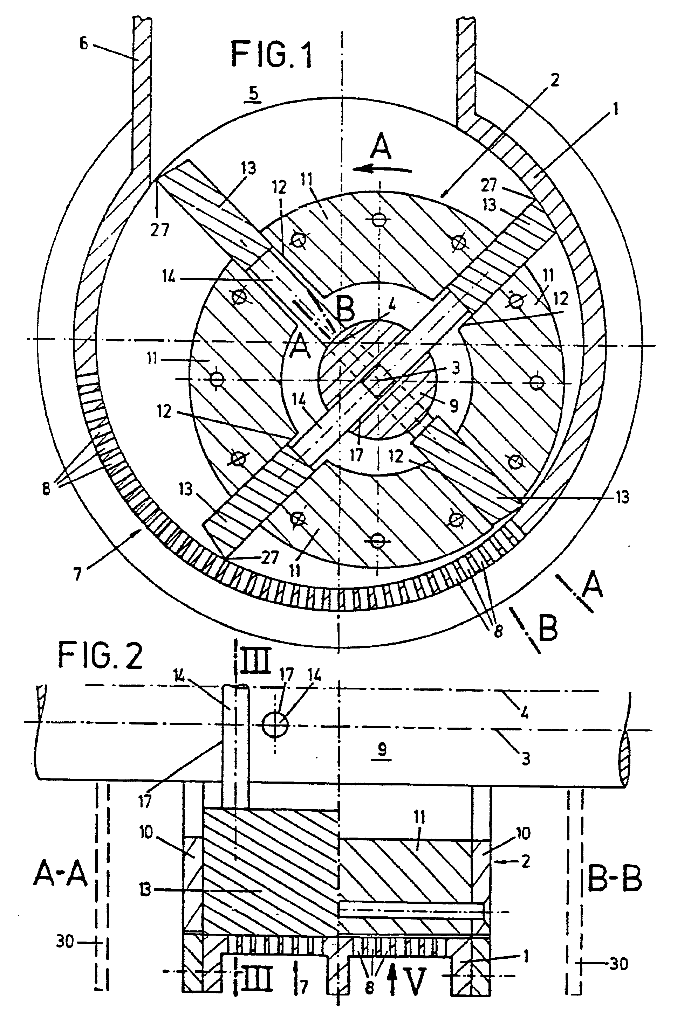

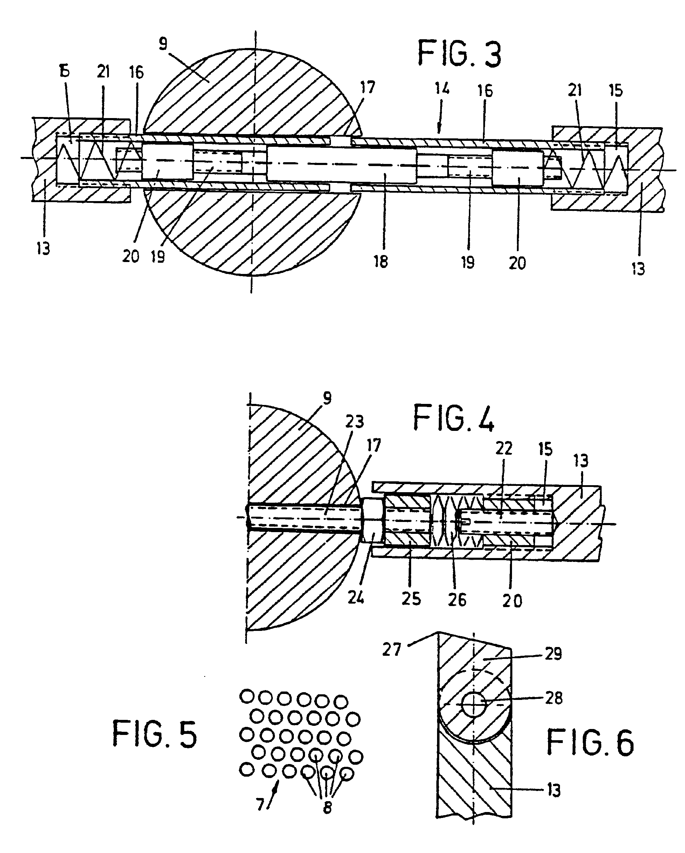

Die Erfindung wird im folgenden anhand vorteilhafter Ausführungsformen näher erläutert, die in den Zeichnungen dargestellt sind ; es zeigen Fig. 1 einen Querschnitt durch die erfindungsgemäße Vorrichtung, Fig. 2 einen Axialschnitt durch die Vorrichtung, wobei die linke Hälfte einen Schnitt nach der Linie A-A und die rechte Hälfte einen Schnitt nach der Linie B-B in Fig. 1 darstellen, Fig. 3 einen Schnitt nach der Linie III-III in Fig. 2 zur Darstellung der Lagerung eines Paares Flügel auf einem Teleskopstab in größerem Maßstab, Fig. 4 eine Variante der Flügellagerung, in größerem Maßstab, Fig. 5 eine Ansicht in Richtung des Pfeiles V in Fig. 2 und Fig. 6 eine Variante des Flügelendes, in größerem Maßstab.

Fig. 1 zeigt im Querschnitt eine vorteilhafte Ausführungsform der Erfindung, bei der in einem zylindrischen Gehäuse 1 exzentrisch ein Rotor 2 gelagert ist, dessen Achse 3 unterhalb der Gehäuseachse 4 verläuft. Das Gehäuse 1 ist im Betrieb mit waagrechter Achse 4 angeordnet und besitzt an seiner Oberseite einen Einlaß 5, an den ein Füllschacht 6 anschließt. Im unteren Gehäusebereich ist über einen Teil des Gehäusemantels, der sich in Drehrichtung A des Rotors 2 betrachtet etwa von der Ebene der Rotorachse 3 bis zur Stelle des geringsten Abstandes zwischen Gehäuse 1 und Rotor 2 erstreckt, ein Auslaß in Form eines Siebes 7 ausgebildet. Die Sieböffnungen sind runde Löcher 8, die in Reihen angeordnet und gegenseitig versetzt sind (s. Fig. 5), damit der gesamte Durchtrittsquerschnitt des Siebes 7 möglichst groß ist.

Wie erwähnt, besteht der Rotor 2 zweckmäßigerweise aus einer Welle 9 mit zwei in einem der Gehäusebreite entsprechenden axialen Abstand angeordneten Scheiben 10, zwischen denen vier Zylindersegmente 11 angebracht sind. Je zwei benachbarte Zylindersegmente 11 begrenzen zwischen einander eine radiale Führung 12 für einen radial verschiebbaren Flügel 13.

Es ist eine gerade Anzahl Flügel 13 vorgesehen, wobei jeweils zwei Flügel 13 einander diametral gegenüberliegend im Rotor 2 gelagert sind und ein Paar bilden. Je zwei einander gegenüber angeordnete, ein Paar bildende Flügel 13 wirken über zwei teleskopartige Stäbe 14 zusammen, die radial angeordnet sind und die Welle 9 des Rotors 2 durchsetzen.

Die Ausbildung dieser Stäbe 14 ist genauer in Fig. 3 dargestellt. Jeder Flügel 13 weist an seiner radialen Innenseite zwei im Abstand angeordnete Gewindebohrungen 15 auf, in die je ein Rohrstück 16 eingeschraubt ist. Die Rohrstücke 16 können in einer entsprechenden Bohrung 17 der Welle gleiten. Innerhalb der Rohrstücke 16 ist ein Bolzen 18 gleitend gelagert, der an beiden Enden je eine Gewindestange 19 trägt, auf die ein Federanschlag 20 für eine sich anderseits am Flügel 13 abstützende Schraubendruckfeder 21 aufgeschraubt ist. Mit Hilfe des Federanschlages 20 läßt sich die wirksame Federkraft einstellen, wobei die Feder 21 vorzugsweise eine progressive Kennlinie aufweist. Der Federanschlag 20 besitzt insbesondere einen dem Bolzen 18 gleichen Außendurchmesser, um als Führungskörper ein Verkanten des Rohrstückes 16 zu verhindern.

Fig. 4 zeigt eine Variante der Flügellagerung, bei der in einer ähnlichen Gewindebohrung 15 des Flügels 13 ein Federanschlag 20 eingeschraubt ist, der mittels einer Fixierschraube 22 fixiert ist. In der entsprechenden Bohrung 17 der Welle sitzt verschiebbar ein Gewindestab 23, auf den ein Anschlag 24 in Form einer Mutter und weiters ein als Führungskörper für den Flügel 13 dienender zweiter Federanschlag 25 aufgeschraubt sind. Zwischen den beiden Federanschlägen 20 und 25 ist ein Tellerfederpaket 26 eingesetzt, wobei die Tellerfedern ebenfalls eine progressive Kennlinie aufweisen oder unterschiedlich starke Tellerfedern hintereinander angeordnet sein können.

Es ist zu bemerken, daß der lichte Abstand zwischen den beiden Anschlägen 24 größer als der Durchmesser der Welle 9 ist, um die vorhin erwähnte Verschiebbarkeit des Gewindestabes 23 zu ermöglichen. Der Verschiebeweg ist erheblich geringer als die doppelte Exzentrizität der Rotorachse 3.

Gemäß Fig. 1 ist das radial äußere Flügelende der Mantelwand des Gehäuses 1 angepaßt und mit einer Schneidkante 27 versehen ; dabei ist zwecks Reibungsverringerung ein (in der Zeichnung nicht gezeigter) geringer Freiwinkel vorgesehen. Anderseits kann das äußere Flügelende gemäß Fig. 6 aus einer um eine zur Rotorachse parallele Achse 28 schwenkbaren, vorzugsweise austauschbar montierten Leiste 29 bestehen.

Die innere Mantelwand des Gehäuses 1 und die äußeren Flügelenden bzw. die Leisten 29 sind gehärtet.

An den Stirnseiten des Gehäuses 1 kann je eine in Fig. 2 mit strichlierten Linien angedeutete Abdeckung 30 angebracht sein, die im wesentlichen über die Gehäusehöhe reicht und dazu dient, allfällig seitlich austretendes Granulat nach unten abzulenken.

Zur Geräuschverminderung kann die Welle 9 des Rotors 2 elastisch gelagert sein ; diese Maßnahme schützt außerdem die Flügel und den Rotor vor Beschädigungen durch Fremdkörper, z.B. in den Sieblöchern sitzenden Steinchen. Weiters ist zweckmäßig, die Welle 9 mit einem Schwungrad zu kuppeln, wobei dieses im Falle eines Antriebes über ein Untersetzungsgetriebe an der Eingangswelle desselben oder der Ausgangswelle des Antriebsmotors vorgesehen ist.

Im Betrieb der Vorrichtung gelangen die durch den Füllschacht 6 zugeführten Hühnerexkremente durch den Einlaß 5 ins Innere des Gehäuses 1, werden dort von einem der Flügel 13 erfaßt und in Richtung des Pfeiles A vorgeschoben. In dem sich nach unten verengenden Raum zwischen Gehäuse 1 und Rotor 2 werden die Exkremente gepreßt und durch die Löcher 8 des Siebes 7 ausgestoßen sowie im Zusammenwirken mit den Flügeln 13 granuliert. Das Granulat fällt sodann nach unten in nicht gezeigte Behälter oder Transporteinrichtungen. Allfällig zwischen Gehäuse 1 und Rotor 2 austretendes Material wird von den Abdeckungen 30 nach unten abgeleitet.

Wesentliches Merkmal der Erfindung ist die gemeinsame Verschiebbarkeit der Flügel 13 jedes Paares im Rotor 2. Betrachtet man beispielsweise den in Fig. 1 links oben gezeigten Flügel 13 bei der Drehung des Rotors 2, so ist ersichtlich, daß er ab der gezeigten Stellung von der Mantelwand des Gehäuses 1 fortschreitend radial in den Rotor 2 eingeschoben wird, bis er die in Fig. 1 rechts unten dargestellte Lage einnimmt, in der er am meisten eingeschoben ist. Das Ausschieben aus dieser Lage erfolgt nun erfindungsgemäß mit Hilfe des ihm diametral gegenüberliegenden zweiten Flügel 13 des Paares, der ja zu diesem Zeitpunkt von der Mantelwand des Gehäuses 1 zwangsläufig eingeschoben wird und diese Einschubbewegung über die beiden Stäbe 14 oder Gewindestäbe 23 auf den ersten Flügel 13 überträgt. Die in den Flügeln 13 vorgesehenen Federn 21 bzw. 26 dienen zum Ausgleich der bloß geringfügigen Abstandsänderungen zwischen den äußeren Flügelenden bzw. Schneidkanten 27 jedes Paares, die weitaus geringer sind als die radial gemessenen Hübe der einzelnen Flügel 13.

Vergleicht man diese Wirkungsweise mit der einer Flügelzellenpumpe, so ergibt sich, daß bei dieser der Federweg gleich der doppelten Exzentrizität der Rotorachse 3 wäre ; da bei voll ausgeschobenem Flügel 13 für diesen ein beträchtlicher Anpreßdruck nötig ist, ergäbe sich bei voll eingeschobenem Flügel 13 eine derart große Federkraft, daß der Flügel 13 eine äußerst große Reibungskraft auf das Gehäuse 1 ausübte und an diesem sowie außerdem in seiner Führung 12 festklemmte. Da ferner nur eine ungenügende Schmierung vorhanden ist, würde eine Flügelzellenpumpe in kürzester Zeit zerstört werden.

Die in Fig. 4 dargestellte Variante der Erfindung kann derart eingestellt werden, daß auf den Flügel 13 in einem Bereich um seine voll ausgeschobene Lage keine Federkraft wirkt, diese vielmehr erst dann wirksam wird, wenn bei Verlassen dieses Bereiches infolge der Verschiebung des Gewindestabes 23 in der Bohrung 17 der Welle 9 der Anschlag 24 an der Welle 9 anschlägt und somit der Federanschlag 25 bezüglich der Welle 9 fixiert ist.

Da die erfindungsgemäße Vorrichtung mit relativ geringen Drehzahlen betrieben wird, ist zweckmäßig ein Schwungrad vorzusehen. Da üblicherweise der Antrieb über einen schnellaufenden Motor sowie ein Untersetzungsgetriebe erfolgt, sitzt das Schwungrad auf der Motorwelle oder der Eingangswelle des Getriebes. Mit der Vorrichtung lassen sich nicht nur Hühnerexkremente zur Herstellung von Düngemitteln granulieren, sondern praktisch alle zähplastischen, hochviskosen Materialien, die zudem mit Fasern od. dgl. gemischt sein können.

## Ansprüche

1. Vorrichtung zum Granulieren von Hühnerexkrementen, mit einem zylindrischen Gehäuse, das einen Einlaß und einen Auslaß aufweist und in dem ein Rotor exzentrisch gelagert ist, in dem wenigstens zwei radial angeordnete Flügel verschiebbar gelagert sind, dadurch gekennzeichnet, daß der Auslaß in Form eines Siebes (7) oder Gitters ausgebildet ist und daß eine gerade Anzahl Flügel (13) vorgesehen ist, von denen je zwei einander diametral gegenüberliegen und ein Paar bilden, und daß die Flügel (13) jedes Paares im Rotor (2) sowohl gemeinsam als auch gegenseitig verschiebbar gelagert sowie mittels wenigstens einer Feder (21 ; 26) auseinandergespannt sind.

2. Vorrichtung nach Anspruch 1, dadurch gekennzeichnet, daß die Feder als Schraubendruckfeder (21) oder Tellerfederpaket (26) ausgebildet ist.

3. Vorrichtung nach Anspruch 1 oder 2, dadurch gekennzeichnet, daß wenigstens ein verstellbarer Federanschlag (20 ; 25) vorgesehen ist.

4. Vorrichtung nach den Ansprüchen 1 bis 3, dadurch gekennzeichnet, daß die Feder (21 ; 26) eine progressive Kennlinie aufweist.

5. Vorrichtung nach den Ansprüchen 1 bis 4, dadurch gekennzeichnet, daß die Flügel (13) jedes Paares auf zwei im Rotor (2) gleitenden radialen teleskopartigen Stäben (14) angebracht sind.

6. Vorrichtung nach den Ansprüchen 1 bis 4, dadurch gekennzeichnet, daß die Flügel (13) jedes Paares auf zwei im Rotor (2) gleitenden radialen Stäben (23) gelagert sind, die mit am Rotor (2) anschlagenden Anschlägen (24) versehen sind.

7. Vorrichtung nach den Ansprüchen 1 bis 6, dadurch gekennzeichnet, daß das äußere Flügelende eine Schneidkante (27) aufweist.

8. Vorrichtung nach den Ansprüchen 1 bis 7, dadurch gekennzeichnet, daß das äußere Flügelende aus einer um eine zur Rotorachse (3) parallele Achse (28) schwenkbaren Leiste (29) besteht.

9. Vorrichtung nach den Ansprüchen 1 bis 8, dadurch gekennzeichnet, daß die innere Mantelwand des Gehäuses (1) und gegebenenfalls die äußeren Flügelenden gehärtet sind.

10. Vorrichtung nach den Ansprüchen 1 bis 9, dadurch gekennzeichnet, daß der Rotor (2) aus einer Welle (9), zwei auf dieser in axialem Abstand angeordneten Scheiben (10) und mit diesen verbundenen Zylindersegmenten (11) besteht.

11. Vorrichtung nach den Ansprüchen 1 bis 10, dadurch gekennzeichnet, daß der Rotor (2) mit einem an der Gehäuseaußenseite vorgesehenen Schwungrad gekuppelt ist.

12. Vorrichtung nach den Ansprüchen 1 bis 11, dadurch gekennzeichnet, daß die Welle (9) des Rotors (2) elastisch gelagert ist.

13. Vorrichtung nach den Ansprüchen 1 bis 12, dadurch gekennzeichnet, daß der Auslaß mit über die Rotorachse (3) reichenden seitlichen Abdeckungen (30) abgedeckt ist.

## Claims

1. Device for granulating chicken excrement with a cylindrical housing comprising an inlet and an outlet and in which a rotor is eccentrically mounted, in which at least two radially configured wings are mounted such that they can be displaced, characterized therein that the outlet is configured in the form of a screen (7) or grille and that an even number of wings (13) is provided, pairs of which lie diametrically opposed to each other, and that the wings (13) of each pair are mounted in the rotor (2) both commonly and such that they can be displaced relative to each other and are held apart by at least one spring (21 ; 26).

2. Device as claimed in claim 1, characterized therein that the spring is configured in the form of a helical compression spring (21) or a disc spring package (26).

3. Device as claimed in claims 1 or 2, characterized therein that at least one adjustable spring stop (20 ; 25) is provided.

4. Device as claimed in claims 1 to 3, characterized therein that the spring (21 ; 26) has a progressive characteristic.

5. Device as claimed in claims 1 to 4, characterized therein that the wings (13) of each pair are mounted on two telescopic radial rods (14) on a sliding mount in the rotor (2).

6. Device as claimed in claims 1 to 4, characterized therein that the wings (13) of each pair are mounted on two radial rods (23) on a sliding mount in the rotor (2) where said rods (23) are provided with stops (24) abutting the rotor (2).

7. Device as claimed in claims 1 to 6, characterized therein that the outer wing end comprises a cutting edge (27).

8. Device as claimed in claims 1 to 7, characterized therein that the outer wing end consists of a rail (29) which can pivot about an axis (28) parallel to the rotor axis (3).

9. Device as claimed in claims 1 to 8, characterized therein that the inner sleeve wall of the housing (1) and, if appropriate, the outer wing ends are hardened.

10. Device as claimed in claims 1 to 9, characterized therein that the rotor (2) consists of a shaft (9), two discs (10) mounted on the latter with an axial spacing and cylinder segments (11) connected to said disks.

11. Device as claimed in claims 1 to 10, characterized therein that the rotor (2) is connected to a flywheel provided on the outside of the housing.

12. Device as claimed in claims 1 to 11, characterized therein that the shaft (9) of the rotor (2) is flexibly mounted.

13. Device as claimed in claims 1 to 12, characterized therein that the outlet is covered by lateral covers (30) which extend over the rotor axis (3).

## Revendications

1. Dispositif pour granuler des excréments de poules comportant un boîtier cylindrique présentant une entrée et une sortie et dans lequel un rotor est logé de manière excentrique, dans lequel au moins deux ailes en disposition radiale sont logées de manière à pouvoir être déplacées, caractérisé en ce que la sortie présente une forme de tamis (7) ou de grillage et qu'un nombre pair d'ailes (13) est prévu dont chaque fois une paire se trouve en position diamétralement opposée et forme une paire et que les ailes (13) de chaque paire sont logées de manière à pouvoir être déplacées dans le rotor (2) aussi bien ensemble qu'en sens réciproquement contraire et que les paires sont écartées au moyen d'au moins un ressort (21 ; 26).

2. Dispositif selon la revendication 1, caractérisé en ce que le ressort est formé comme ressort de pression hélicoïdal (21) ou comme ensemble de ressort Belleville (26).

3. Dispositif selon les revendications 1 et 2, caractérisé en ce qu'au moins une butée de ressort réglable (20 ; 25) est prévue.

4. Dispositif selon les revendications 1 à 3, caractérisé en ce que le ressort (21 ; 26) présente une ligne caractéristique progressive.

5. Dispositif selon les revendications 1 à 4, caractérisé en ce que les ailes (13) de chaque paire sont montées sur deux barres (14) glissant en sens radial dans le rotor (2) à la manière d'un télescope.

6. Dispositif selon les revendications 1 à 4, caractérisé en ce que les ailes (13) de chaque paire sont logées ou montées sur deux barres glissant radialement (23) dans le rotor (2), qui sont pourvues de butées (24) en contact avec le rotor (2).

7. Dispositif selon les revendications 1 à 6, caractérisé en ce que l'extrémité extérieure de l'aile présente une arête tranchante (27).

8. Dispositif selon les revendications 1 à 7, caractérisé en ce que l'extrémité extérieure de l'aile consiste en une partie pivotable (29) autour d'un axe (28) parallèle à l'axe du rotor (3).

9. Dispositif selon les revendications 1 à 8, caractérisé en ce que l'intérieur des parois du boîtier (1) et, le cas échéant, les extrémités d'ailes extérieures sont trempées.

10. Dispositif selon les revendications 1 à 9, caractérisé en ce que le rotor (2) consiste en un arbre (9), deux disques (10) disposés en espacement axial sur celui-ci et des segments de cylindre (11) reliés aux disques.

11. Dispositif selon les revendications 1 à 10, caractérisé en ce que le rotor (2) est accouplé à un volant prévu sur le côté extérieur du boîtier.

12. Dispositif selon les revendications 1 à 11, caractérisé en ce que l'arbre (9) du rotor (2) est monté de manière élastique.

13. Dispositif selon les revendications 1 à 12, caractérisé en ce que la sortie est recouverte de couvercles latéraux (30) s'étendant au-delà de l'axe du rotor (3).

# FIG.1

# FIG.2

A-A

B-B

FIG. 3

FIG. 4

FIG. 5

FIG. 6